# EUROPEAN PATENT APPLICATION

(11) **EP 4 685 547 A1**
(43) Date of publication of application: **28.01.2026**
(21) Application number: 24848417.2
(22) Date of filing: 13.09.2024
(51) Int. Cl.: G02C 7/02

(54) **MYOPIA PREVENTION AND CONTROL SPECTACLE LENS HAVING FRACTAL MICROSTRUCTURE**

(30) Priority: 31.07.2023 CN 202310952409
(71) Applicant: Peking University People's Hospital, Beijing 100044 (CN)
(72) Inventor: WANG, Kai, Beijing 100044 (CN)
(74) Representative: Bayramoglu et al.
(86) International application number: PCT/CN2024/118773
(87) International publication number: WO 2025/026464

(57) **Abstract**

The discloure provides a myopia prevention and control spectacle lens with fractal microstructure, which belongs to the design and processing technical field of optical lenses. The spectacle lens comprises a lens base, on which an optical zone and a control zone are provided. The optical zone includes a central optical zone, which is a region with a radius of R1 centered at the central position of the spectacle lens. The control zone surrounds the outer side of the central optical zone. In the control zone, there are microstructures formed by fractal curves or fractal patterns on the plane of the lens base, or microstructures formed by fractal curves or fractal patterns between the layers of the lens base. The present discloure enhances the degree of optical perturbation by increasing the complexity of the peripheral microstructures as much as possible, thereby interfering with the process of myopia progression.

## Description

This application claims priority of a Chinese application CN2023109524092 filed on July 31, 2023 and entitled "myopia prevention and control spectacle lens with fractal microstructure", and the whole content of which is combined in this application by reference.

### TECHNICAL FIELD

The discloure belongs to the the technical field of the design and processing of optical lenses, especially relates to myopia prevention and control spectacle lens with fractal microstructure.

### BACKGROUND TECHNOLOGY

According to the data of the National Health Commission, the number of myopia patients in China has reached 600 million. In 2020, the overall myopia rate among Chinese adolescents was 52.7%, among which the myopia rate of 6 - year - old children was 14.3%, that of primary school students was 35.6%, that of junior high school students was 71.1%, and that of senior high school students was 80.5%. The task of myopia prevention and control is arduous and the situation is urgent..

At present, the mainstream optical theory for myopia prevention and control is the optical defocus theory. This theory holds that if an image is focused to form an image in front of the retina (i.e., positive defocus), the eye axis is less likely to grow, and myopia can be controlled; applying an image focused behind the retina (negative defocus) has the opposite effect. The current mainstream optical means for myopia prevention and control include defocus frame glasses (hereinafter referred to as defocus glasses), orthokeratology lenses (hereinafter referred to as OK lenses), and defocus soft contact lenses (hereinafter referred to as defocus soft lenses). Within the existing theoretical framework, all three are believed to achieve the effect of delaying the development of myopia through myopic defocus in the peripheral vision.

In addition, there is another type of lens that is based on reducing peripheral visual field contrast. According to the myopia control theory, high contrast signals are detrimental to myopia prevention and control, so reducing the peripheral visual field contrast is beneficial to myopia control.

However, the theory of optical positive defocus cannot explain all the clinical phenomena. In clinical practice, some juvenile myopia patients can not be effectively controlled even if they are given enough positive defocus optical signals, and even show a rapid increase in myopia. Some patients replace the OK lens with peripheral defocus lens, but the myopia is controlled. These clinical phenomena suggest that the theory of optical defocus is extremely incomplete, and the optical correction method for myopia prevention and control needs a higher level of myopia control theory support.

Currently, there are several products on the market based on the optical positive defocus theory, all of which are based on the optical defocus theory. Different from the products based on the optical defocus theory, there is also a lens on the market based on the peripheral contrast theory.
1) MiYOSMART Lenses: The MiYOSMART lenses adopt the "Multi - Zone Defocus Incorporated Multiple Segments" (D.I.M.S) design. 396 micro - lenses are distributed in a regular triangular grid in the annular area with an inner - ring diameter of 9.4 mm and an outer - ring diameter of about 33 mm at the optical center of the lens. Each micro - lens can form myopic defocus, and the defocus amount is 3.5D. At the same time, the size and interval of the micro - lenses are adjusted to keep the ratio of the defocus degree area to the correction degree area stable (target 50:50). It enables the lens to continuously provide the myopic defocus effect for the wearer, thus achieving a better myopia control effect. In 2018, The Hong Kong Polytechnic University published "Myopia Progression Retardation with Multizone Defocus Incorporated Multiple Segments (DIMS) Spectacle Lenses: a 2 - Year Randomized Controlled Clinical Trial" in the British Journal of Ophthalmology. It showed that under the conditions of a relatively higher sample size compared with similar studies and without adding specified conditions for screening, it effectively slowed down myopia progression by 59% and slowed down the increase of the eye axis by 60%.
2) Stellest Lenses: The Stellest lenses are brought by the research and development team of Essilor with the High - Aspherical Lenslet Technology (H.A.L.T). The Stellest lenses designed with this technology have 1021 micro - lenses invisibly distributed on 11 star - shaped rings, all of which are positive defocus micro - lenses. The optical center distance between adjacent rings of micro - lenses of the Stellest lenses is 2.41 mm. Even when the human eye looks at the periphery, such as looking downward when looking at near objects, it can still obtain clear central vision of the retinal macula from the single - vision lens area within this gap. A three - year clinical trial involving 167 myopic children was carried out for this product. The results of the first - year experiment showed that compared with children wearing single - vision lenses, the average level of myopia development in children wearing Stellest lenses was reduced by more than 60% ("One - year myopia control efficacy of spectacle lenses with aspherical lenslets. Br J Ophthalmol 2022 Aug;106(8):1171 - 1176").
3) Aura lenses: Different areas of the retina may respond differently to myopic defocus signals. Animal studies have shown that a defocus of 10°-20° around the fovea can produce the strongest myopia control. Aura lenses should be used as much as possible in the most sensitive areas of retinal myopic defocus. Different density, different size, reasonable design of the defocus lens, through the radial linear array arrangement, for the most sensitive area of myopia defocus in the range of 10°-20° around the macular fovea, stronger optical defocus can be applied to strengthen the effect of myopia management. The balance between pursuing excellent visual quality and improving patient compliance.
4) DOT lenses (Nikon) : A genetic mutation in myopia causes myopic patients to express cone photoreceptors that are very insensitive to light. In myopic patients, the mutant cone always produces a small signal relative to the adjacent normal cone; therefore, the contrast between the normal cone and the mutant cone is always high. This abnormally high retinal contrast signal may lead to myopia development. The control principle of control advantage lenses is different from optical defocus. It uses Diffusion Opitics Technology (DOT). DOT lenses contain light scattering centers that scatter light as it passes through the lens, resulting in a lower signal difference between neighboring cones, While maintaining excellent visual acuity and functional peripheral vision. The researchers used the lenses in the Efficacy and Safety Study (CYPRESS), a 36-month randomized controlled trial, with pooled 24-month results now available, and 89% of children continued to wear them for the final 12 months of follow-up. The previous two years, according to data if wear throughout the day, 2 years of myopia progression fell 59%, 38% lower axial growth (Control of myopia using diffusion optics spectacle lenses: 12-month results of a randomised controlled, efficacy and safety study (CYPRESS) . Br J Ophthalmol. 2022 Sep 1;bjophthalmol-2021-321005).
5) Hexgon Optimized Reticular (HORI) : Using the integrated mesh array optimization technology, 540 hexagonal microlens units are embedded within the 35mm diameter of the lens to form a closely seamless integrated mesh array. The filling rate of the lens is up to 67%. Preliminary studies based on this technology have shown that the spherical equivalent control rate is about 70% and the axial length control rate is about 50% compared with the control group.

All of the above optical frame lenses for adolescent myopia prevention and control, four of which are based on the optical positive defocus theory and one is based on the peripheral retinal contrast theory, have a control effect of approximately 60% and have a considerable effect on adolescent myopia prevention and control. However, the optical theories of myopia prevention and control adopted by all the above - mentioned lenses are incomplete, which also leads to a theoretical limit in the myopia control effect of lenses based on either optical defocus or contrast theory.

The reason why the control effects of the above - mentioned lenses are similar is that the lenses, whether in terms of micro - structures or micro - lenses, show artificial traces in the distribution of the peripheral part of the lens, that is, there is a certain degree of geometric consistency, or spatial distribution consistency, or some obvious artificial rules. In addition, the microscopic morphology of all these micro - structures or micro - lenses is not complex enough, and the perturbation to vision is not strong enough. Taking Newmyo as an example, the visual experience in all micro - structure areas is the same, so the visual experience is similar in different viewing directions - that is, the point - spread function shows a convergence phenomenon in different directions. Similarly, lenses with other designs also have obvious artificial traces and an obvious regular distribution.

### SUMMARY OF THE INVENTION

The discloure proposes a new myopia prevention and control theory, namely the optical phase chaos technology of the peripheral retina, and based on this technology, a myopia prevention and control spectacle lens with fractal microstructure is designed.

The discloure provides a myopia prevention and control spectacle lens with fractal microstructure, which comprises:
A lens base, on which an optical zone and a control zone are provided;
The optical zone includes a central optical zone, and the central optical zone is a region with a radius of R1 centered at the central position of the spectacle lens;
The control zone surrounds the outer side of the central optical zone, and in the control zone provided with microstructures formed by fractal curves or fractal patterns on the plane of the lens base, or microstructures formed by fractal curves or fractal patterns between the layers of the lens base.

Further, the fractal curves or fractal patterns can be Peano curves, Hilbert curves, Wunderlich curves, fractal dragons, leaf fractals, Koch curves, Mandelbrot sets, Koch triangles, or Mandelbrot - Julia figures.

Further, in the optical zone, R1 ranges from 2.5 to 7.5 mm.

Further, the control zone is in a circular - ring shape.

Further, the line width of the fractal curves or fractal patterns ranges from 50 to 1500 µm.

Further, the total diameter of the lens base is 70 - 75 mm.

In another aspect, the present disclosure provides a myopia prevention and control eyeglasses, which includes any one of the above - mentioned myopia prevention and control spectacle lenses.

The present disclosure at least has the following advantages:
The myopia prevention and control spectacle lens with a fractal microstructure proposed by the present disclosure, by means of the optical phase chaos technology, sets up microstructures formed by fractal curves or fractal patterns on the plane of the spectacle lens or between the layers of the spectacle lens in the control zone of the spectacle lens. By increasing the complexity of the peripheral microstructures as much as possible, the degree of optical perturbation is enhanced, thereby interfering with the process of myopia progression. The core idea of the optical phase chaos technology is different from the optical defocus theory and the contrast theory. It mainly lies in that the microstructures distributed around the frame lens should have relative complexity or non - repeatability in space and geometric shape. That is, within the limited area of the lens, artificial intention should be avoided as much as possible. Instead, the fractal design of nature is adopted to reduce regular spatial distribution and the distribution of microstructure shapes, and increase the complexity of the microstructures themselves or the uncertainty of their distribution.

### BRIEF DESCRIPTION OF THE DRAWINGS

"Drawings forming part of the present discloure are used to provide further understanding of the present discloure, and schematic embodiments and descriptions thereof are used to interpret the present discloure and do not constitute undue limitation of the present discloure." In the accompanying drawings:
FIG.1 is a schematic structural diagram of the spectacle lens in an embodiment of the present discloure;
FIG.2 shows schematic cross - sectional structural diagram of the spectacle lens with planar fractal curves or fractal patterns in an embodiment of the present discloure;
FIG.3 shows a schematic cross - sectional structural diagram of the spectacle lens with fractal curves or fractal patterns (Hilbert curve) constructed between layers in an embodiment of the present discloure;
   Wherein, the reference numerals illustrate: 1 lens base; 2 optical zone; 3 control zone.
FIG.4 shows a schematic structural diagram of the tunnel structure constructed by the Hilbert curve in an embodiment of the present discloure.
FIG.5 shows a schematic structural diagram of the peripheral microstructure lens constructed by the Hilbert curve in an embodiment of the present discloure.
FIG.6 shows a schematic structural diagram of the peripheral microstructure lens constructed by the Peano curve in an embodiment of the present discloure.
FIG. 7 shows the peripheral microstructure lens constructed by Wunderlich curve in an embodiment of the present discloure.
FIG. 8 shows a peripheral microstructured lens constructed by a complex Peano curve in an embodiment of the discloure.

### DETAILED DESCRIPTION OF THE EMBODIMENTS

It should be noted that, without conflict, the embodiments of the present invention and the features in the embodiments can be combined with each other.

The existing commercially available myopia control and management lenses are all based on the principle of optical defocus. The optical theories of myopia prevention and control adopted by all the above - mentioned lenses are incomplete, which also leads to a theoretical limit in the myopia - controlling effect of lenses based on either optical defocus or contrast theory.

The reason why the control effects of the above - mentioned lenses are similar is that the lenses, whether in terms of microstructures or microlenses, show artificial traces in the distribution of the peripheral part of the lens. That is, there is a certain degree of geometric consistency, or spatial distribution consistency, or some obvious artificial rules. As a result, when the eye gazes in a certain direction, the visual experience is basically the same, that is, the point - spread function shows similarity. The microscopic morphology of these microstructures or microlenses is not complex enough, and the perturbation to vision is not strong enough. Therefore, the control effect is generally ideal in the first half year, but once neural adaptation occurs, the control efficiency will significantly decline.

Through a large number of basic and clinical studies, the inventors of this application have proposed the optical phase chaos technology and designed the microstructures around the lens using the fractal language of nature. The core idea is not to provide microlenses of a certain shape, but to create sufficient optical interference in the peripheral vision so that the retina cannot distinguish the correct growth direction of the eye in a short time, thereby effectively interfering with the process of myopia progression.

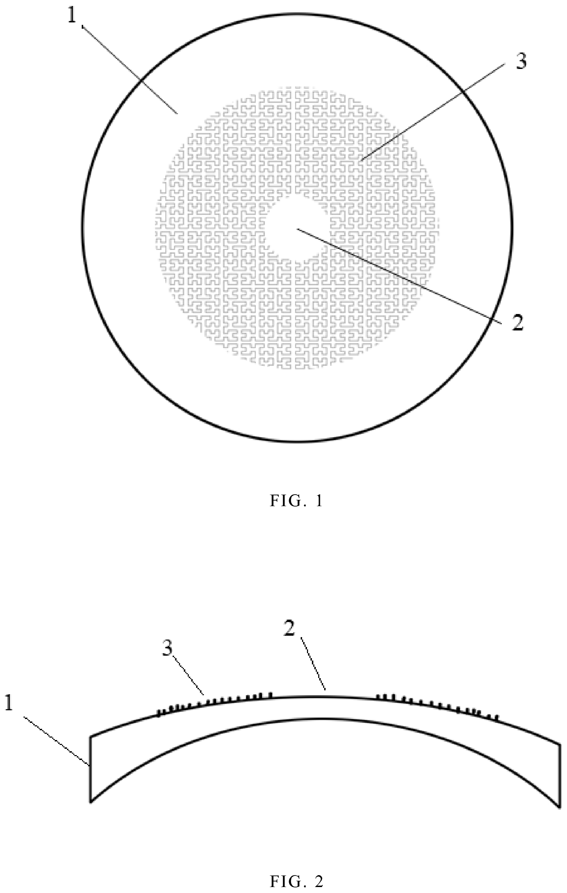

As shown in FIG. 1, an embodiment of the present disclosure provides a myopia prevention and control spectacle lens with fractal microstructure. The spectacle lens includes:
A lens base 1, on which an optical zone 2 and a control zone 3 are provided;

The optical zone 2 includes a central optical zone, and the central optical zone is a region with a radius of R1 centered at the central position of the spectacle lens;

The control zone 3 surrounds the outer side of the central optical zone. In the control zone 3, there are microstructures formed by fractal curves or fractal patterns on the plane of the lens base 1, or microstructures formed by fractal curves or fractal patterns between the layers of the lens base 1.

The main advantage of the microstructure of the myopia prevention and control spectacle lens proposed in the embodiment of the present invention is that when gazing in different directions, the visual experience after light passes through the microstructures of fractal curves or fractal patterns is different, thereby effectively interfering with the process of myopia progression.

Further, the fractal curves or fractal patterns can be Peano Curve, Hilbert Curve, Wunderlich curve, Fractal Dragon, Fractal Leaves, Koch Curve, Mandelbrot Set, Koch Triangle, or Mandelbrot - Julia sets. For example, fractal curves or fractal patterns such as Peano Curve, Hilbert Curve, Wunderlich curve, Fractal Dragon, Fractal Leaves, Koch Curve, Mandelbrot Set, Koch Triangle, or Mandelbrot - Julia sets can be used to construct microstructures around the lens. The fractal curves or fractal patterns set in the control zone of the present invention can create sufficient optical interference in the peripheral vision so that the retina cannot distinguish the correct growth direction of the eye in a short time, thereby effectively interfering with the process of myopia progression.

Further, in the optical zone 2, R1 ranges from 2.5 to 7.5 mm.

Further, the control zone 3 is in a circular - ring shape.

Further, the line - width range of the fractal curves or fractal patterns is 50 - 1500 µm, and the line - width ratio of black and white lines can be arbitrary.

Preferably, the total diameter of the lens base is 70 - 75 mm.

Further, the cross - sectional morphological relationship between the microstructure and the lens base can be a square wave, triangle, trapezoid, convex lens, or concave lens. Other fractal geometric figures can also be used.

In the embodiment of the present invention, the optical zone of the spectacle lens is mainly used to correct refractive errors. The peripheral control zone of the spectacle lens uses fractal curves or fractal patterns to construct microstructures, creating sufficient optical interference in the peripheral vision so that the retina cannot distinguish the correct growth direction of the eye in a short time, thereby effectively interfering with the process of myopia progression.

In a preferred embodiment of the present invention, the microstructure formed by fractal curves or fractal patterns is provided on the plane of the spectacle lens, the cross - section of the spectacle lens is as shown in FIG. 2 below.

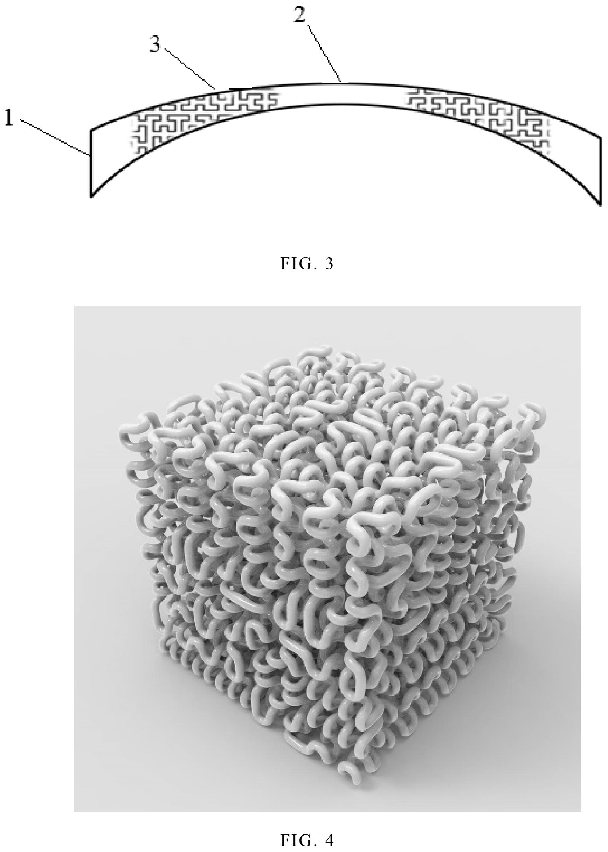

In another preferred embodiment of the present invention, the microstructure formed by fractal curves or fractal patterns (Hilbert curve) is provided between the layers of the spectacle lens, the cross - section of the spectacle lens is as shown in FIG. 3 below. The Hilbert curve can be used to fill three - dimensional space. Filling the fractal curves or fractal patterns between the layers in the peripheral control zone of the lens forms a tunnel.

In the embodiment of the present invention, the spectacle lens has a certain thickness. Manufacturing microstructures between the layers of the lens can optimize the optical interface for optical perturbation. For a lens with microstructures between the layers constructed by fractal curves or fractal patterns, specifically, micro - tunnels are constructed at the inter - layer positions around the lens, using fractal curves or fractal patterns such as the Hilbert curve, as shown in FIG. 4 below. The laser internal carving technology is used, and the minimum size of the pipeline structure can reach the order of dozens of microns.

The present discloure will be described in detail in combination with examples below.

### Example 1 peripheral microstructured lens constructed with a Hilbert curve

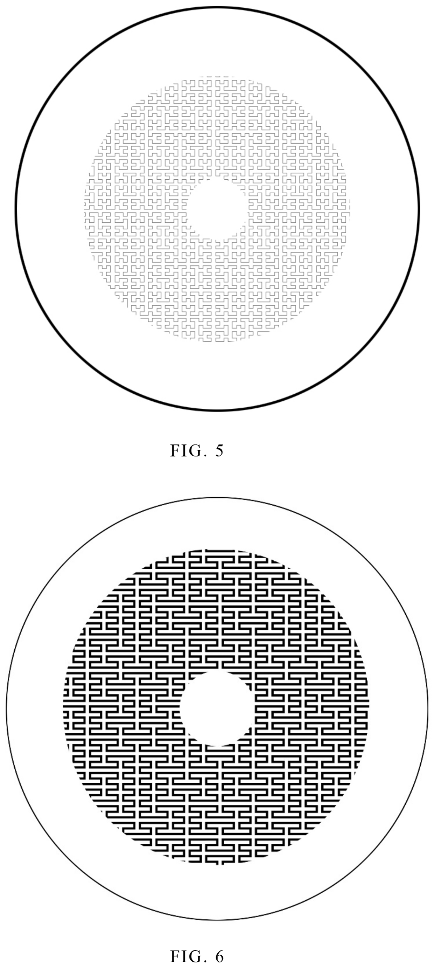

As shown in FIG. 5, a Hilbert fractal curve protruding from the lens base is made on the lens base.

The line - width of the curve is 500 µm, the line - width ratio of black and white lines is 1:1, the cross - section of the curve shape is spherical, the refractive power of the cross - section cylindrical lens is + 3.00DC, and the refractive index of the lens is 1.74. The calculated sagittal height of the Hilbert fractal curve is 0.13µm. Considering the coating processing accuracy and the submergence of the microstructure during the coating process, the sagittal height of the curve cross - section can be made to be 0.3 - 0.4µm.

### Example 2 Peripheral microstructured lenses constructed with Peano curves

As shown in FIG. 6, a Peano fractal curve indented into the lens base is made on the lens base.

The line - width of the curve is 800 µm, the line - width ratio of black and white lines is 1:1, the cross - section of the curve shape is spherical, the refractive power of the cross - section cylindrical lens is - 5.00DC, and the refractive index of the lens is 1.67. The calculated sagittal height of the Peano fractal curve is 0.60µm. Considering the coating processing accuracy and the submergence of the microstructure during the coating process, the sagittal height of the curve cross - section can be made to be 1 - 1.3µm.

### Example 3 Inter-layer microstructured lenses constructed with Hilbert curves.

As shown in FIG. 3, the laser internal carving technology is used to construct a Hilbert tunnel with a tunnel diameter of 50µm, filling the inter - layer part around the lens.

### Example 4 Peripheral micro-structured lens constructed by Wunderlich curve.

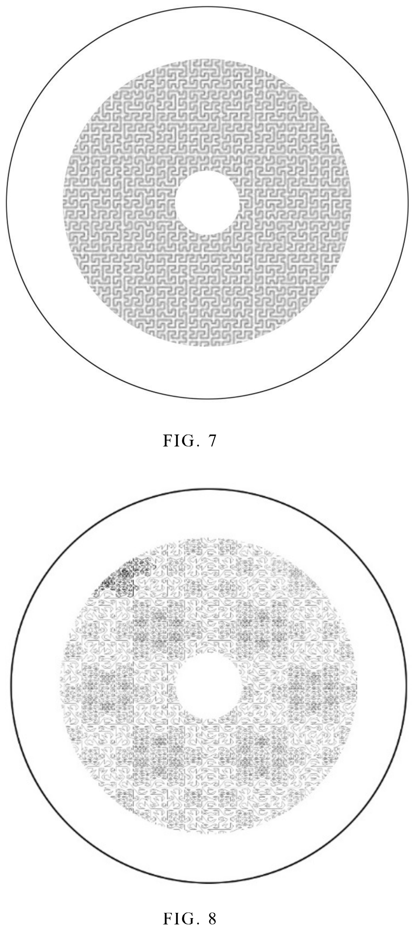

As shown in FIG. 7, a Wunderlich fractal curve protruding from the lens base is made on the lens base.

The line - width of the curve is 500 µm, the line - width ratio of black and white lines is 1:1, the cross - section of the curve shape is spherical, the refractive power of the cross - section cylindrical lens is + 3.00DC, and the refractive index of the lens is 1.74. The calculated sagittal height of the Wunderlich fractal curve is 0.13µm. Considering the coating processing accuracy and the submergence of the microstructure during the coating process, the sagittal height of the curve cross - section can be made to be 0.3 - 0.4µm.

### Example 5 Peripheral microstructured lenses with complex Piano curve construction

As shown in FIG. 8, a complex Peano fractal curve protruding from the lens base is made on the lens base. The characteristics of this curve are different densities and inconsistent line - widths, with a complex graphic structure.

The line - width of the curve ranges from 400 - 800 µm, the cross - section of the curve shape is spherical, the refractive power of the microstructure cross - section cylindrical lens is a continuous curve of + 6.00DC, and the refractive index of the lens is 1.67. The calculated sagittal height of the Peano fractal curve ranges from 0.18 - 0.72µm. Considering the coating processing accuracy and the submergence of the microstructure during the coating process, the sagittal height of the curve cross - section can be made to be 0.5 - 1.3µm.

The above are only preferable embodiments of the present discloure and are not used to limit the present discloure. Any modification, equivalent replacement, improvement, etc. made within the spirit and principle of the present discloure shall be included in the scope of protection of the present discloure.

## Claims

1. A myopia prevention and control spectacle lens with fractal microstructure, **characterized in that** the spectacle lens comprises:
a lens base, on which an optical zone and a control zone are provided;
the optical zone includes a central optical zone, and the central optical zone is a region with a radius of R1 centered at the central position of the spectacle lens;
the control zone surrounds the outer side of the central optical zone and in the control zone provided with microstructures formed by fractal curves or fractal patterns on the plane of the lens base, or microstructures formed by fractal curves or fractal patterns between the layers of the lens base (1).

2. The myopia prevention and control spectacle lens according to claim 1, **characterized in that** the fractal curve or fractal pattern can adopt Peano curve, Hilbert curve, Wunderlich curve, fractal dragon, leaf fractal, Koch curve, Mandelbrot set, Koch triangle or Mandelbrot - Julia figure.

3. The myopia prevention and control spectacle lens according to claim 1, **characterized in that** in the optical zone, R1 ranges from 2.5 to 7.5 mm.

4. The myopia prevention and control spectacle lens according to claim 1, **characterized in that** the control area is in a circular - ring shape.

5. The myopia prevention and control spectacle lens according to claim 1, **characterized in that** the line - width range of the fractal curves or fractal patterns is 50 - 1500 µm.

6. The myopia prevention and control spectacle lens according to claim 1, **characterized in that** the total diameter of the lens base is 70-75mm.

7. A myopia prevention and control eyeglass, **characterized by** comprising the myopia prevention and control spectacle lens according to any one of claims 1-6.
